# EUROPEAN PATENT SPECIFICATION

(11) **EP 3 008 387 B1**
(45) Date of publication and mention of the grant of the patent: **02.09.2020**
(21) Application number: 14847007.3
(22) Date of filing: 13.06.2014
(51) Int. Cl.: F23M 5/00, F23M 5/08, F02C 7/12, F23R 3/42, F23R 3/00, F23R 3/06

(54) **CONDUCTIVE PANEL SURFACE COOLING AUGMENTATION FOR GAS TURBINE ENGINE COMBUSTOR**
OBERFLÄCHENKÜHLUNGSVERSTÄRKUNG FÜR EINE GASTURBINENBRENNKAMMER DURCH EINE LEITFÄHIGE PLATTE
AUGMENTATION DU REFROIDISSEMENT D'UNE SURFACE DE PANNEAU CONDUCTEUR POUR CHAMBRE DE COMBUSTION DE MOTEUR À TURBINE À GAZ

(30) Priority: 14.06.2013 US 201361835153 P; 19.12.2013 US 201361918422 P
(43) Date of publication of application: 20.04.2016
(73) Proprietor: United Technologies Corporation, Farmington, CT 06032 (US)
(72) Inventor: DRAKE, Christopher, Atlanta, Georgia 30309 (US); KOSTKA, JR. Stanislav, Shrewsbury, MA 01545 (US)
(74) Representative: Dehns
(86) International application number: PCT/US2014/042284
(87) International publication number: WO 2015/047472

(56) References cited:
- EP-A2- 1 043 479
- EP-A2- 1 050 663
- EP-A2- 2 589 872
- GB-A- 2 390 569
- US-A- 5 353 865
- US-A1- 2004 123 598
- US-A1- 2004 131 877
- US-A1- 2004 166 355
- US-B1- 6 170 266

## Description

### BACKGROUND

The present invention relates to a wall assembly for use in a combustor of a gas turbine engine.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

Advanced engine cycles require the combustor section to operate at high compressor exit temperatures. A survey of typical flight envelopes often reveals that high compressor exit temperatures exist with reduced supply pressure at high altitude. These operational conditions result in relatively high convection and radiation heat loads.

Among the engine components, relatively high temperatures are observed in the combustor section such that cooling airflow is provided to meet desired service life requirements. The combustor section typically includes a combustion chamber formed by an inner and outer wall assembly. Each wall assembly includes a support shell lined with heat shields, which are often referred to as liner panels. In certain combustion architectures, dilution passages direct airflow to condition air within the combustion chamber.

In addition to the dilution passages, the shells may have relatively small air impingement passages to direct cooling air to impingement cavities between the support shell and the liner panels. This cooling air exits numerous effusion passages through the liner panels to effusion cool the passages and film cool a hot side of the liner panels to reduce direct exposure to the combustion gases.

EP 1050663 A2 discloses the features of the preamble of claim 1. EP 1043479 A2 shows cast turbine blades having convectively cooling wave form patterns on the inner cooling surfaces of the blades.

### SUMMARY

A wall assembly for use in a combustor of a gas turbine engine, according to an aspect of the present invention, is claimed in claim 1.

In a further embodiment of any of the foregoing embodiments of the present invention, the convective feature may be additively manufactured with a substrate and/or may be of a convective material different than the material of the substrate.

In a further embodiment of any of the foregoing embodiments of the present invention, the bond coating may also be applied to the hot side.

In a further embodiment of any of the foregoing embodiments of the present invention, a thermal barrier coating may be applied to the bond coating on the hot side.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic cross-section of an example gas turbine engine architecture;
FIG. 2 is a schematic cross-section of another example gas turbine engine architecture;
FIG. 3 is an expanded longitudinal schematic sectional view of a combustor section according to one non-limiting embodiment that may be used with the example gas turbine engine architectures shown in FIGS. 1 and 2;
FIG. 4 is an exploded partial sectional view of a portion of a combustor wall assembly;
FIG. 5 is an expanded perspective view of a portion of a liner panel array from a cold side;
FIG. 6 is a sectional view of a portion of a wall assembly according to the invention;
FIG. 7 is a cold side view of a combustor liner panel with a multiple of convective features not according to the invention;
FIG. 8 is a sectional view of a multiple of convective features not according to the invention.

### DETAILED DESCRIPTION

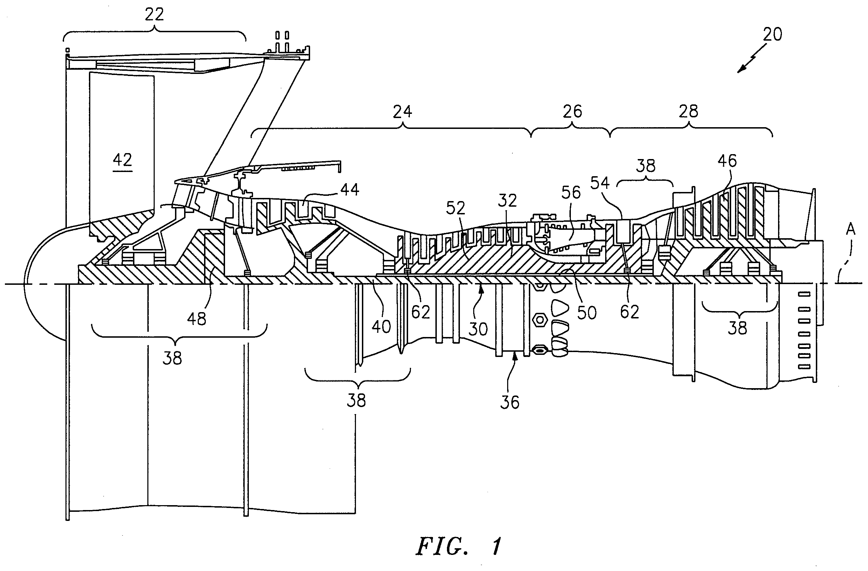

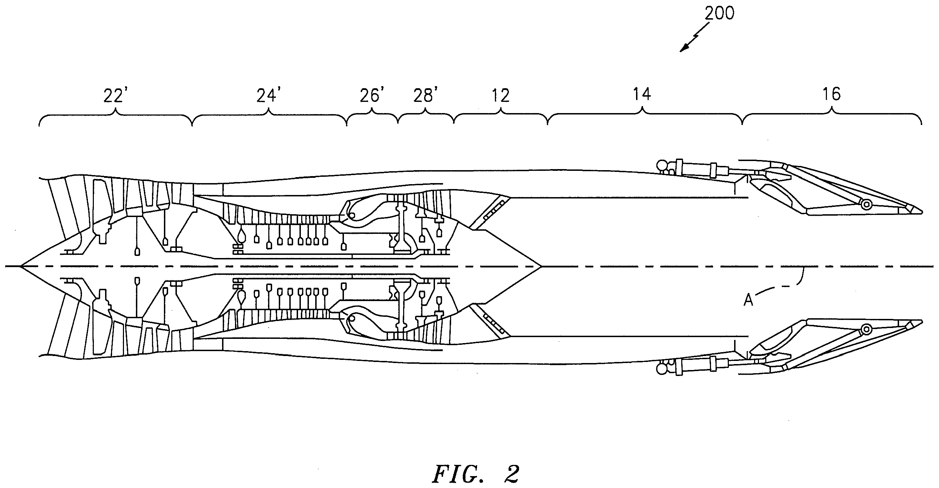

FIG. 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Referring to FIG. 2, alternative engine architectures 200 might include an augmentor section 12, an exhaust duct section 14 and a nozzle section 16 in addition to the fan section 22', compressor section 24', combustor section 26' and turbine section 28' among other systems or features. Referring again to FIG. 1, the fan section 22 drives air along a bypass flowpath and into the compressor section 24. The compressor section 24 drives air along a core flowpath for compression and communication into the combustor section 26, which then expands and directs the air through the turbine section 28. Although depicted as a turbofan in the disclosed non-limiting embodiment, it should be understood that the concepts described herein are not limited to use with turbofans as the teachings may be applied to other types of turbine engines such as a turbojets, turboshafts, and three-spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between a high pressure turbine ("HPT") and a low pressure turbine ("LPT").

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor ("LPC") 44 and a low pressure turbine ("LPT") 46. The inner shaft 40 may drive the fan 42 directly or through a geared architecture 48 as illustrated in FIG. 1 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52 and a high pressure turbine ("HPT") 54. A combustor 56 is arranged between the HPC 52 and the HPT 54. The inner shaft 40 and the outer shaft 50 are concentric and rotate about the engine central longitudinal axis A which is collinear with their longitudinal axes.

Core airflow is compressed by the LPC 44 then the HPC 52, mixed with the fuel and burned in the combustor 56, then expanded over the HPT 54 and the LPT 46. The LPT 46 and HPT 54 rotationally drive the respective low spool 30 and high spool 32 in response to the expansion. The main engine shafts 40, 50 are supported at a plurality of points by the bearing systems 38 within the static structure 36.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the LPC 44 and the LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting embodiment, the bypass ratio of the gas turbine engine 20 is greater than about ten (10:1), the fan diameter is significantly larger than that of the LPC 44, and the LPT 46 has a pressure ratio that is greater than about five (5:1). It should be understood, however, that the above parameters are only exemplary of one embodiment of a geared architecture engine and that the present disclosure is applicable to other gas turbine engines including direct drive turbofans.

In one embodiment, a significant amount of thrust is provided by the bypass flow path due to the high bypass ratio. The fan section 22 of the gas turbine engine 20 is designed for a particular flight condition - typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("Tram" / 518.7)^{0.5}. The Low Corrected Fan Tip Speed according to one non-limiting embodiment of the example gas turbine engine 20 is less than about 351 m/s (1150 fps)

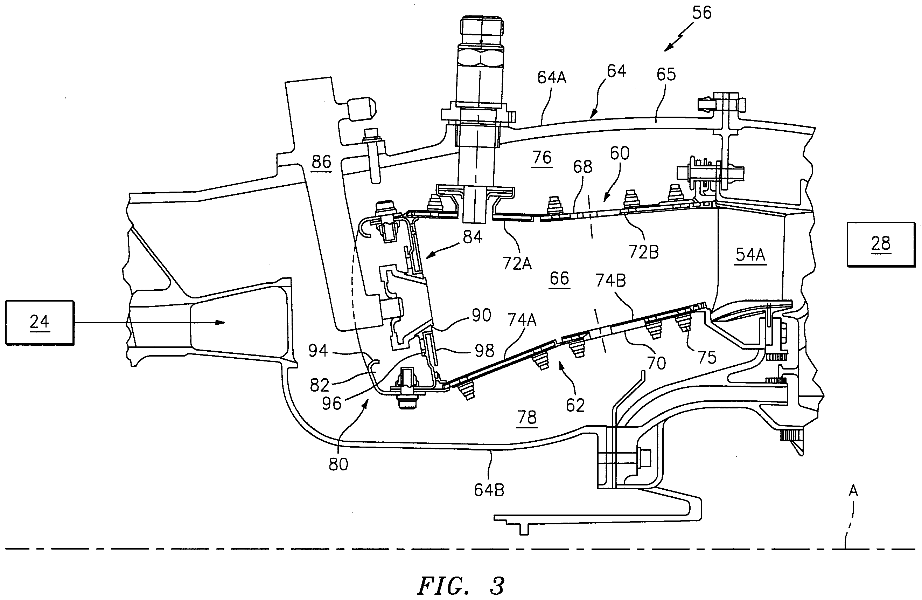

With reference to FIG. 3, the combustor section 26 generally includes a combustor 56 with an outer combustor wall assembly 60, an inner combustor wall assembly 62 and a diffuser case module 64. The outer combustor wall assembly 60 and the inner combustor wall assembly 62 are spaced apart such that a combustion chamber 66 is defined therebetween. The combustion chamber 66 is generally annular in shape to surround the engine central longitudinal axis A.

The outer combustor liner assembly 60 is spaced radially inward from an outer diffuser case 64A of the diffuser case module 64 to define an outer annular plenum 76. The inner combustor liner assembly 62 is spaced radially outward from an inner diffuser case 64B of the diffuser case module 64 to define an inner annular plenum 78. It should be understood that although a particular combustor is illustrated, other combustor types with various combustor liner arrangements will also benefit herefrom. It should be further understood that the disclosed cooling flow paths are but an illustrated embodiment and should not be limited only thereto.

The combustor wall assemblies 60, 62 contain the combustion products for direction toward the turbine section 28. Each combustor wall assembly 60, 62 generally includes a respective support shell 68, 70 which supports one or more liner panels 72, 74 mounted thereto arranged to form a liner array. The support shells 68, 70 may be manufactured by, for example, hydroforming of a sheet metal alloy to provide the generally cylindrical outer shell 68 and inner shell 70. Each of the liner panels 72, 74 may be generally rectilinear with a circumferential arc. The liner panels 72, 74 may be manufactured of, for example, a nickel based super alloy, ceramic or other temperature resistant material substrate. In one disclosed non-limiting embodiment, the liner array includes a multiple of forward liner panels 72A and a multiple of aft liner panels 72B that are circumferentially staggered to line the outer shell 68. A multiple of forward liner panels 74A and a multiple of aft liner panels 74B are circumferentially staggered to line the inner shell 70.

The combustor 56 further includes a forward assembly 80 immediately downstream of the compressor section 24 to receive compressed airflow therefrom. The forward assembly 80 generally includes a cowl 82, a bulkhead assembly 84, and a multiple of swirlers 90 (one shown). Each of the swirlers 90 is circumferentially aligned with one of a multiple of fuel nozzles 86 (one shown) and the respective hood ports 94 to project through the bulkhead assembly 84.

The bulkhead assembly 84 includes a bulkhead support shell 96 secured to the combustor walls 60, 62, and a multiple of circumferentially distributed bulkhead liner panels 98 secured to the bulkhead support shell 96 around the swirler opening. The bulkhead support shell 96 is generally annular and the multiple of circumferentially distributed bulkhead liner panels 98 are segmented, typically one to each fuel nozzle 86 and swirler 90.

The cowl 82 extends radially between, and is secured to, the forwardmost ends of the combustor walls 60, 62. The cowl 82 includes a multiple of circumferentially distributed hood ports 94 that receive one of the respective multiple of fuel nozzles 86 and facilitates the direction of compressed air into the forward end of the combustion chamber 66 through a swirler opening. Each fuel nozzle 86 may be secured to the diffuser case module 64 and project through one of the hood ports 94 and through the swirler opening within the respective swirler 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and inner support shells 68, 70 are mounted to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

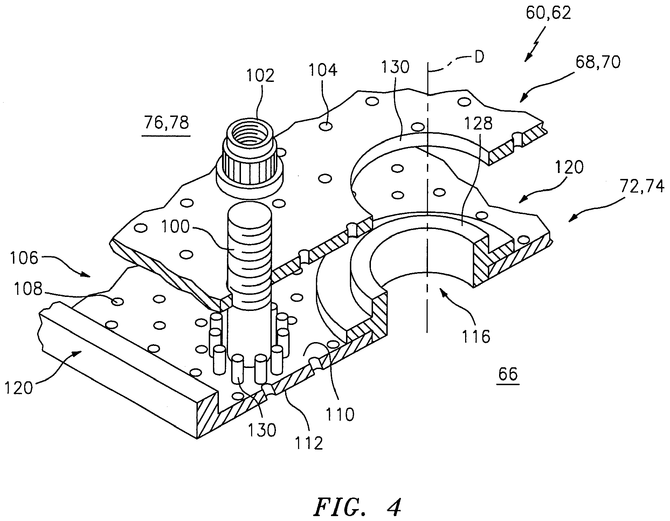

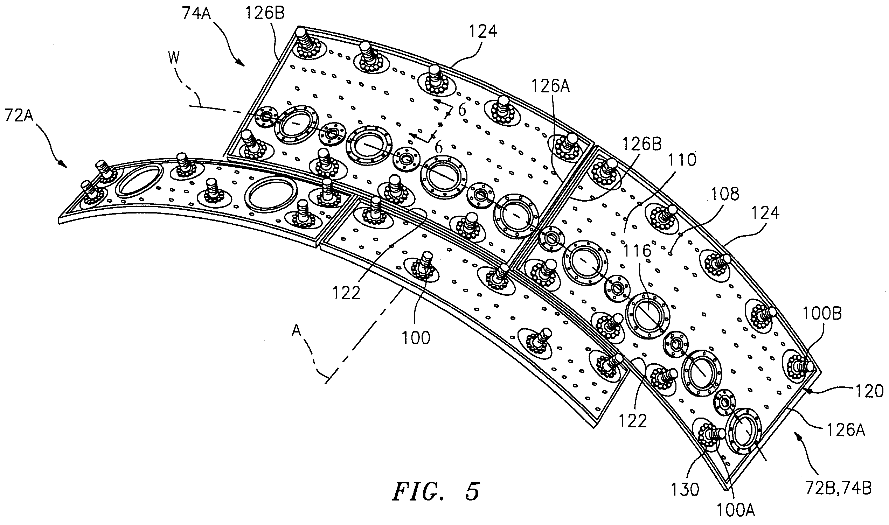

With reference to FIG. 4, a multiple of studs 100 extend from each of the liner panels 72, 74 so as to permit an array (partially shown in FIG. 5) of the liner panels 72, 74 to be mounted to their respective support shells 68, 70 with fasteners 102 such as nuts. That is, the studs 100 project rigidly from the liner panels 72, 74 to extend through the respective support shells 68, 70 and receive the fasteners 102 on a threaded section thereof.

A multiple of cooling impingement passages 104 penetrate through the support shells 68, 70 to allow air from the respective annular plenums 76, 78 to enter cavities 106 formed in the combustor walls 60, 62 between the respective support shells 68, 70 and liner panels 72, 74. The cooling impingement passages 104 are generally normal to the surface of the liner panels 72, 74. The air in the cavities 106 provide cold side impingement cooling of the liner panels 72, 74 that is generally defined herein as heat removal via internal convection.

A multiple of effusion passages 108 penetrate through each of the liner panels 72, 74. The geometry of the passages (e.g., diameter, shape, density, surface angle, incidence angle, etc.) as well as the location of the passages with respect to the high temperature combustion flow also contributes to effusion film cooling. The effusion passages 108 allow the air to pass from the cavities 106 defined in part by a cold side 110 of the liner panels 72, 74 to a hot side 112 of the liner panels 72, 74 and thereby facilitate the formation of a thin, relatively cool, film of cooling air along the hot side 112. In one disclosed non-limiting embodiment, each of the multiple of effusion passages 108 are typically 0.025" (0.635 mm) in diameter and define a surface angle of about thirty (30) degrees with respect to the cold side 110 of the liner panels 72, 74. The effusion passages 108 are generally more numerous than the impingement passages 104 and promote film cooling along the hot side 112 to sheath the liner panels 72, 74. Film cooling as defined herein is the introduction of a relatively cooler air at one or more discrete locations along a surface exposed to a high temperature environment to protect that surface in the region of the air injection as well as downstream thereof. The combination of impingement passages 104 and effusion passages 108 may be referred to as an Impingement Film Floatwall (IFF) assembly.

A multiple of dilution passages 116 may penetrate through both the respective support shells 68, 70 and liner panels 72, 74 along a common axis D. For example only, the dilution passages 116 are located in a circumferential line W (shown partially in FIG. 5). Although the dilution passages are illustrated in the disclosed non-limiting embodiment as within the aft liner panels 72B, 74B, the dilution passages may alternatively be located in the forward liner panels 72A, 72B or in a single liner panel which replaces the fore/aft liner panel array.

With reference to FIG. 5, in one disclosed non-limiting embodiment not according to the invention, each of the aft liner panels 72B, 74B in the liner panel array includes a perimeter rail 120 formed by a forward circumferential rail 122, an aft circumferential rail 124 and axial rails 126A, 126B that interconnect the forward and aft circumferential rail 122, 124. The perimeter rail 120 seals each liner panel 72B, 74B with respect to the support shell 68, 70 to form the impingement cavity 106 therebetween (see FIG. 4). That is, the forward and aft circumferential rail 122, 124 are located at relatively constant curvature shell interface while the axial rails 126 extend across an axial length of the respective support shell 68, 70 to complete the perimeter rail 120 that seals the liner panels 72B, 74B to the respective support shell 68, 70.

A row of studs 100A, 100B are located adjacent to the respective forward circumferential rail 122 and aft circumferential rail 124. Each of the studs 100A, 100B may be at least partially surrounded by posts 130 to at least partially support the fastener 102 and provide a stand-off between each liner panels 72B, 74B and respective support shell 68, 70. Some liner panels may include various surface augmentation features on a cold side to increase heat transfer and provide increased cooling effectiveness. The effectiveness of this heat transfer, however, is limited by the conductivity of the panel material as the effectiveness may decrease as features increase in size due to the increased distance between the cold side and hot side of the liner panel.

The dilution passages 116 are located downstream of the forward circumferential rail 122 to quench the hot combustion gases within the combustion chamber 66 by direct supply of cooling air from the respective annular plenums 76, 78. That is, the dilution passages 116 pass air at the pressure outside the combustion chamber 66 directly into the combustion chamber 66. This dilution air is not primarily used for cooling of the combustor shells or panels, but to condition the combustion products within the combustion chamber 66.

Some engine cycles and architectures require that the gas turbine engine combustor 56 operate at relatively high compressor exit temperatures aft of the HPC 52 - referred to herein as T3. As further perspective, T1 is a temperature in forward of the fan section 22; T2 is a temperature at the leading edge of the fan 42; T2.5 is the temperature between the LPC 44 and the HPC 52; T3 is the temperature aft of the HPC 52; T4 is the temperature in the combustion chamber 66; T4.5 is the temperature between the HPT 54 and the LPT 46; and T5 is the temperature aft of the LPT 46 (see FIG. 1). These engine cycles and architectures also result in a further requirement that the high compressor exit temperatures exist in concert with a cooling air supply pressure decrease at higher altitudes. That is, available pressures may not be sufficient for cooling requirements at high altitudes as the heat transfer capability of the liner panels 72, 74 decrease by a factor of about two (2) as supply pressures decreases from, for example, sea level ram air flight conditions to higher altitude up and away flight conditions. The increased internal heat transfer coefficient of T3 for these engine cycles and architectures may require an increase of total heat transfer, specifically convective heat transfer, between the cooling air (T3) and the gas path air (T3.1).

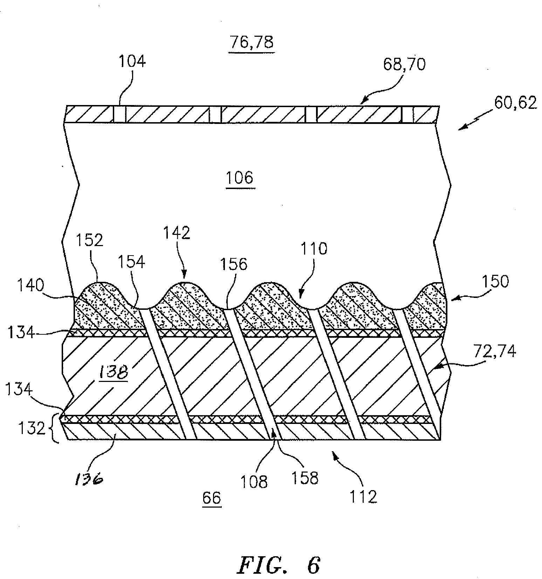

With reference to FIG. 6, in one disclosed non-limiting embodiment according to the invention, the liner panels 72, 74 include a thermal barrier coating 132 to facilitate protection of the hot side 112 from hot combustion gases and the associated radiated heat. The thermal barrier coating 132 typically includes a bond coat 134 and a top coat 136 applied over the bond coat 134 on the hot side 112 of a liner panel substrate 138. In one disclosed non-limiting embodiment, the bond coat 134, may be a nickel-based alloy material and the top coat 136 may be a ceramic material. The bond coat 134 is typically applied to the entirety of the liner panel 72, 74. That is, the hot side 112 as well as the cold side 110 of the substrate 138 is coated with the bond coat 134 primarily due to manufacturing efficiency. In other words, it is more efficient to bond coat the entire liner panel rather than mask or otherwise segregate areas of the liner panels 72, 74. The top coat 136, in one disclosed non-limiting embodiment, is thicker than the bond coat 134 and is typically evenly applied in layers via a plasma spray coating system only onto the hot side 112 of the liner panel 72, 74 over the bond coat 134.

In this disclosed non-limiting embodiment according to the invention, the exposed bond coat 134 on the cold side 110 of the liner panel 72, 74 is available to receive a convective coating 140. The convective coating 140 is unevenly applied to form a multiple of convective features 142 to increase heat transfer. That is, the convective coating 140 is applied to the cold side 110 over the bond coat 134 in an uneven manner to form the multiple of convective features 142. The convective coating 140 is selectively applied thicker in certain areas to form a wave pattern 150 of alternating peaks 152 and troughs 154. It should be appreciated that the wave pattern 150 may be skewed or otherwise geometrically shaped to have various predefined wavelengths and/or amplitudes. The part of the wave pattern 150 half-way between each peak 152 and the trough 154 may be defined as the baseline, the peak 152 is generally convex and the trough 154 is generally concave. The wave pattern 150 may be circumferentially arranged about the combustor chamber 66 and skewed toward the downstream NGVs 54A. In other words, the wave pattern 150 may not be exactly uniform and may be biased toward a particular direction such as toward the NGVs 54A. It should also be appreciated that the wave pattern 150 need not be located over the entirety of the cold side 110 of each liner panel 72, 74.

Each trough 154 includes an entrance 156 to a respective effusion passage 108 at the lowest point therein. In other words, the entrances 156 are in the cold side 110 at, for example, the closest location(s) of the outer/exposed surface of the convective coating 140) to the hot side 112. The peaks 152 that flank each trough 154 facilitate capture and direction of air into each of the effusion passages 108. The entrance 156 may be displaced from an exit 158 of the effusion passages 108 such that the effusion passage 108 defines an angle through each liner panel 72, 74. That is, the effusion passage 108 need not be perpendicular through each liner panel 72, 74 with respect to the hot side 112 and may be angled with respect to the wave pattern 150.

In this disclosed non-limiting embodiment, the multiple of cooling impingement passages 104 penetrate through the support shells 68, 70 to direct air from the respective annular plenums 76, 78 to impinge onto the peaks 152. That is, the multiple of cooling impingement passages 104 may be directed toward the peaks 152 such that the impingement air will turbulate and cause a pressure increase. As the impingement air is turbulated off the cold side 110 of each liner panel 72, 74, a pressure drop across the liner panel 72, 74 develops to facilitate navigation of the air into the effusion passages 108, and thence the combustion chamber 66.

After the impingement air is turbulated off of the peaks 140, a pressure drop across the panel 72, 74 causes the air to navigate into the troughs 154 thence thru the effusion passage 108 and the combustor chamber 66. The entrance 156 to the effusion passages 108 is located within the troughs 154 and at least partially segregated by the peaks 152. This essentially increases the cooling air navigation path to the entrance 156 and increases the time for convective heat transfer to facilitate cooling effectiveness.

Cooling effectiveness of the liner panel 72, 74 is dependent on a number of factors, one of which is the heat transfer coefficient. This heat transfer coefficient depicts how well heat is transferred from the liner panel 72, 74, to the cooling air. As the liner panel 72, 74 surface area increases, this coefficient increases due to a greater ability to transfer heat to the cooling air - turbulation of the air also increases this heat transfer. The peaks 152 and troughs 154 increase these two factors, and thereby increase the cooling ability of the line panel 72, 74. Further, the convective features 142 increase liner panel area and, as the convective features 142 are formed of the convective coating 140, the same efficiency as a flat plate is retained.

In general, flow transition from the stagnation impingement flow to turbulence follows the mechanism associated with turbulence creation through unstable Tollmien-Schiliting peaks, three-dimensional instability, then by vortex breakdown in a cascading process which leads to intense flow fluctuations and energy exchange or high heat transfer. This process, facilitated by the multiple of convective features 142, allows for high energy exchange, produces turbulence, coalescence of turbulence spot assemblies and redirection of flow towards more sensitive heat transfer areas, along with flow reattachment. All these factors lead to intense energy transport.

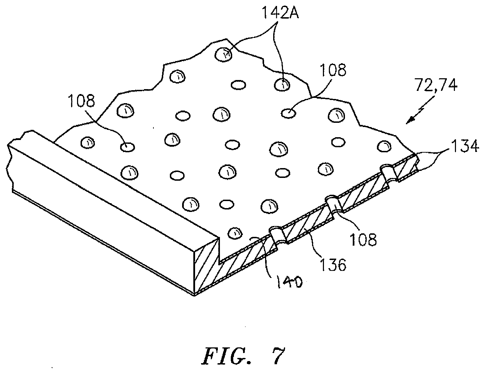

With reference to FIG. 7, in another disclosed non-limiting embodiment not according to the invention, the convective coating 140 is applied as a splatter to form the multiple of convective features 142A. That is, the multiple of convective features 142A are essentially spots of convective coating 140 which can be randomly applied.

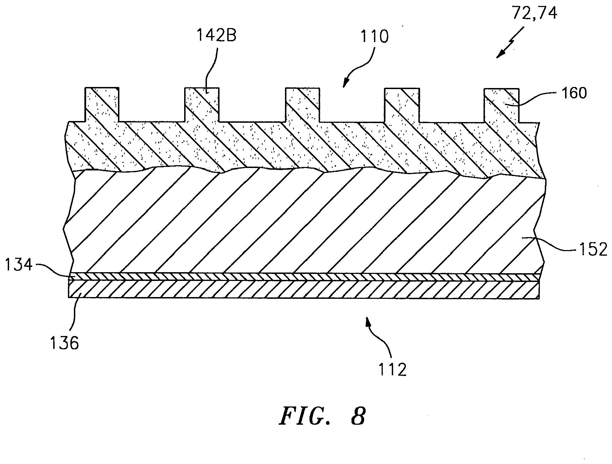

With reference to FIG. 8, in another disclosed non-limiting embodiment not according to the invention, the convective features 142B may be manufactured via an additive manufacturing process that facilitates incorporation of the convective features 142B as well as other features. One additive manufacturing process includes powder bed metallurgy in which layers of powder alloy such as nickel, cobalt, or other material is sequentially build-up by systems from, for example, Concept Laser of Lichtenfels, DE and EOS of Munich, DE, e.g. direct metal laser sintering or electron beam melting.

The convective features 142B are additively manufactured from a conductive material 160 different than a material 152 for the remainder of the liner panel 72, 74 which is typically manufactured of a nickel based super alloy, ceramic or other temperature resistant material. That is, the convective features 142B are integrally additive manufactured of a conductive material 160. In embodiments not according to the invention, the convective features 142B may be formed as, for example, pins, hemispheres, ridges and other raised features that extend from the cold side 110 of the liner panel 72, 74. As these convective features are manufactured using a conductive material of higher conductivity than that of the panel material itself, heat transfer can be increased due to increased thermal transfer effectiveness. Additionally, in an embodiment not according to the invention, the convective features 142B may also receive the conductive coating 140 thereon as described above. That is, the convective features 142B are manufactured from the conductive material 160 with the conductive coating 140 applied thereto. The use of the conductive coating allows for an increase in the feature effectiveness thus improving heat transfer.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the features within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the invention may be practiced other than as specifically described. For that reason the appended claims should be studied to determine true scope and content.

## Claims

1. A wall assembly for use in a combustor (56) of a gas turbine engine, the wall assembly comprising:
a shell (68, 70) with a multiple of impingement flow passages (104); and
a liner panel (72, 74) mounted to said shell (68, 70), said panel (72, 74) including a bond coating (134) on at least a cold side (110) thereof, and a convective coating (140) on said bond coating (134) on said at least one cold side (110), said convective coating (140) including a convective feature which faces said shell (68, 70); **characterised in that**:
said convective feature includes a wave pattern (150) of alternating peaks (152) and troughs (154) formed by selectively applying thicker the convective coating (140) in certain areas, wherein at least one of the troughs (154) includes an entrance (156) to an effusion passage (108) at a lowest point of the at least one of the throughs (154).

2. The wall assembly as recited in claim 1, wherein a bond coating (134) is also applied to a hot side (112) of said liner panel (72, 74).

3. The wall assembly as recited in claim 2, further comprising a thermal barrier coating (132) applied to said bond coating (134) on said hot side (112).

4. The wall assembly as recited in any preceding claim, wherein said convective feature is additively manufactured with a substrate of said liner panel (72, 74) and wherein said convective feature is of a convective material different than said substrate, or a material which forms a or the hot side (112) of said liner panel (72, 74).

5. The wall assembly as recited in claim 1, the liner panel comprising:
a substrate with a hot side (112) and said at least a cold side (110);
a bond coating (134) on said hot side (112) of said substrate; and
wherein said convective feature on said at least a cold side (110) of the substrate is of a material different than a material of said substrate.

6. The wall assembly as recited in any preceding claim, wherein said entrance (156) is displaced from an exit (158) of the effusion passage (108) such that the effusion passage (108) defines an angle through the panel (72, 74) and is angled with respect to the pattern (150).

7. The wall assembly as recited in any preceding claim, wherein respective ones of the impingement flow passages (104) are directed towards respective peaks (152) of the pattern (150).

## Patentansprüche

1. Wandanordnung zur Verwendung in einer Brennkammer (56) von einem Gasturbinentriebwerk, wobei die Wandanordnung Folgendes umfasst:
eine Hülle (68, 70) mit einem Vielfachen von Prallströmungskanälen (104); und
eine Verkleidungsplatte (72, 74), die an die Hülle (68, 70) montiert ist, wobei die Platte (72, 74) eine Bindungsbeschichtung (134) an mindestens einer Kaltseite (110) von dieser und eine konvektive Beschichtung (140) auf der Bindungsbeschichtung (134) an der mindestens einen Kaltseite (110) beinhaltet, wobei die konvektive Beschichtung (140) ein konvektives Merkmal beinhaltet, das der Hülle (68, 70) zugewandt ist; **dadurch gekennzeichnet, dass**:
das konvektive Merkmal ein Wellenmuster (150) alternierender Spitzen (152) und Täler (154) beinhaltet, die durch das selektiv dickere Auftragen der konvektiven Beschichtung (140) in bestimmten Bereichen gebildet wird, wobei mindestens eines der Täler (154) einen Eingang (156) zu einem Effusionskanal (108) an einem tiefsten Punkt des mindestens einen der Täler (154) beinhaltet.

2. Wandanordnung nach Anspruch 1, wobei eine Bindungsbeschichtung (134) auch auf einer Heißseite (112) der Verkleidungsplatte (72, 74) aufgebracht ist.

3. Wandanordnung nach Anspruch 2, ferner umfassend eine Wärmedämmschicht (132), die auf die Bindungsbeschichtung (134) auf der Heißseite (112) aufgebracht ist.

4. Wandanordnung nach einem der vorhergehenden Ansprüche, wobei das konvektive Merkmal zusätzlich mit einem Substrat der Verkleidungsplatte (72, 74) hergestellt ist und wobei das konvektive Merkmal aus einem konvektiven Material, das sich von dem Substrat unterscheidet, oder einem Material besteht, das eine oder die Heißseite (112) der Verkleidungsplatte (72, 74) bildet.

5. Wandanordnung nach Anspruch 1, wobei die Verkleidungsplatte Folgendes umfasst:
ein Substrat mit einer Heißseite (112) und der mindestens einen Kaltseite (110);
eine Bindungsbeschichtung (134) auf der Heißseite (112) des Substrats; und
wobei das konvektive Merkmal auf der mindestens einen Kaltseite (110) des Substrats aus einem Material besteht, das sich von einem Material des Substrats unterscheidet.

6. Wandanordnung nach einem der vorhergehenden Ansprüche, wobei der Eingang (156) von einem Ausgang (158) des Effusionskanals (108) derart versetzt ist, dass der Effusionskanal (108) einen Winkel durch die Platte (72, 74) definiert und in Bezug auf das Muster (150) gewinkelt ist.

7. Wandanordnung nach einem der vorhergehenden Ansprüche, wobei jeweilige der Prallströmungskanäle (104) in Richtung jeweiliger Spitzen (152) des Musters (150) gelenkt werden.

## Revendications

1. Ensemble de parois pour son utilisation dans une chambre de combustion (56) d'un moteur à turbine à gaz, l'ensemble de parois comprenant :
une enveloppe (68, 70) avec de multiples passages d'écoulement par contact (104) ; et
un panneau de doublure (72, 74) monté sur ladite enveloppe (68, 70), ledit panneau (72, 74) comportant un revêtement de cohésion (134) sur au moins un côté froid (110) de celui-ci, et un revêtement de convection (140) sur ledit revêtement de cohésion (134) sur ledit au moins un côté froid (110), ledit revêtement de convection (140) comportant un élément de convection qui est face à ladite enveloppe (68, 70) ; **caractérisé en ce que** :
ledit élément de convection comporte un motif d'ondulation (150) de crêtes (152) et de creux (154) en alternance formés par l'application sélective du revêtement de convection (140) en couche plus épaisse dans certaines zones, dans lequel au moins l'un des creux (154) comporte une entrée (156) vers un passage d'effusion (108) au niveau d'un point le plus bas de l'au moins un des creux (154).

2. Ensemble de parois selon la revendication 1, dans lequel un revêtement de cohésion (134) est également appliqué à un côté chaud (112) dudit panneau de doublure (72, 74).

3. Ensemble de parois selon la revendication 2, comprenant en outre un revêtement de barrière thermique (132) appliqué audit revêtement de cohésion (134) sur ledit côté chaud (112).

4. Ensemble de parois selon une quelconque revendication précédente, dans lequel ledit élément de convection est fabriqué de façon additive avec un substrat dudit panneau de doublure (72, 74), et dans lequel ledit élément de convection est en un matériau de convection différent dudit substrat, ou un matériau qui forme un ou le côté chaud (112) dudit panneau de doublure (72, 74) .

5. Ensemble de parois selon la revendication 1, le panneau de doublure comprenant :
un substrat avec un côté chaud (112) et ledit au moins un côté froid (110) ;
un revêtement de cohésion (134) sur ledit côté chaud (112) dudit substrat ; et
dans lequel ledit élément de convection sur ledit au moins un côté froid (110) du substrat est en un matériau différent d'un matériau dudit substrat.

6. Ensemble de parois selon une quelconque revendication précédente, dans lequel ladite entrée (156) est déplacée vis-à-vis d'une sortie (158) du passage d'effusion (108) de sorte que le passage d'effusion (108) définisse un angle à travers le panneau (72, 74) et soit coudé par rapport au motif (150).

7. Ensemble de parois selon une quelconque revendication précédente, dans lequel des passages respectifs des passages d'écoulement par contact (104) sont dirigés vers des crêtes (152) respectives du motif (150).
